(19) Europäisches Patentamt
European Patent Office
Office européen des brevets

(11) **EP 2 055 547 B1**

(12) **EUROPEAN PATENT SPECIFICATION**

(45) Date of publication and mention
of the grant of the patent:
**02.10.2013  Bulletin 2013/40**

(51) Int Cl.:
***B60K 6/46*** *(2007.10)*     ***B60L 11/18*** *(2006.01)*
***B60W 20/00*** *(2006.01)*   ***B60L 11/12*** *(2006.01)*
***B60W 10/08*** *(2006.01)*

(21) Application number: **07792878.6**

(22) Date of filing: **22.08.2007**

(86) International application number:
**PCT/JP2007/066289**

(87) International publication number:
**WO 2008/023735 (28.02.2008 Gazette 2008/09)**

(54) **HYBRID ROLLING STOCK**

HYBRIDROLLMATERIAL

MATERIEL ROULANT HYBRIDE

(84) Designated Contracting States:
**FR GB**

(30) Priority:  **24.08.2006   JP 2006227586**

(43) Date of publication of application:
**06.05.2009   Bulletin 2009/19**

(73) Proprietors:
• **Hitachi, Ltd.**
**Chiyoda-ku**
**Tokyo 100-8280 (JP)**
• **East Japan Railway Company**
**Tokyo 151-8578 (JP)**

(72) Inventors:
• **SUZUKI, Masato**
**Hitachinaka-shi, Ibaraki 3128506 (JP)**
• **TOYOTA, Eiichi**
**Hitachinaka-shi, Ibaraki 3128506 (JP)**
• **SHIMADA, Motomi**
**Hitachinaka-shi, Ibaraki 3128506 (JP)**

• **KANEKO, Takashi**
**Hitachinaka-shi, Ibaraki 3128506 (JP)**
• **NOMOTO, Hiroshi**
**Tokyo 1518578 (JP)**
• **SHIMAMUNE, Ryohei**
**Tokyo 1518578 (JP)**
• **FURUTA, Ryosuke**
**Tokyo 1518578 (JP)**
• **OMURA, Tetsuro**
**Tokyo 1518578 (JP)**

(74) Representative: **Paget, Hugh Charles Edward et al**
**Mewburn Ellis LLP**
**33 Gutter Lane**
**London**
**EC2V 8AS (GB)**

(56) References cited:
EP-A1- 1 745 967        JP-A- 2000 253 507
JP-A- 2001 025 103      JP-A- 2003 134 604
JP-A- 2004 166 367      JP-A- 2006 176 057
US-A1- 2003 191 576     US-A1- 2007 124 037

**Description**

TECHNICAL FIELD

The present invention relates to a hybrid rolling stock simultaneously utilizing an engine generator and a secondary battery.

BACKGROUND ART

The development of so-called hybrid rolling stocks simultaneously utilizing an engine generator and a secondary battery has enabled to form an environment-friendly rolling stock system realizing low fuel consumption, low exhaust gas and low noise.

On the other hand, since the secondary battery constantly retains electric energy, there is danger that the secondary battery may have power leak or be exploded in case of abnormality, and therefore, a secondary battery monitoring device for detecting information related to the voltage, current, temperature, charged state and deteriorated state of the secondary battery is provided, and if any abnormality related to these information is found, or if abnormality of the secondary battery monitoring device itself occurs, the secondary battery is released immediately.

Since the current secondary battery has a small capacity per unit cell, when the secondary battery is applied to rolling stocks, a plurality of secondary batteries must be connected in series-parallel connection, so that there was a drawback in that the volume, weight and costs were increased when the second battery was applied to conventional rolling stocks.

SUMMARY OF THE INVENTION

PROBLEM TO BE SOLVED BY THE INVENTION

In hybrid rolling stocks, when a starting device for starting the engine must be provided independently, not only the size but also the costs of the device will be increased. Further, when abnormality occurs to the secondary battery, the secondary battery is released and the engine generator can no longer be started, and in addition, if the system is independent, the system is stopped and the rolling stock can no longer be started, causing serious inconvenience to the users.

Therefore, the problem to be solved in hybrid rolling stocks is the use of secondary battery power for starting the engine.

The object of the present invention is to provide a hybrid rolling stock capable of down-sizing and cutting the cost of the system, and capable of starting the system even when abnormality occurs to the secondary battery.

EP 1 745 967 is regarded as the closest prior art. It relates to hybrid train comprising an engine, a generator driven by the engine, a power converting means for converting an AC power output from the generator to DC power, a secondary battery connected in parallel to an output of the power converting means, and a power converter control means for controlling the power converting means based on a state of a load, wherein the engine is arranged to be started by the power of the secondary battery. The starting of the engine is performed by converting the DC power of the secondary battery to AC power via the power converting means, and driving the generator as a motor by means of the converted AC power.

US2007/0124037 relates to stop-start operation of a heavyduty hybrid vehicle which performs many stops, such as urban buses and local package freight pick-up and delivery vans. An onboard electric energy storage unit assists the primary power unit, driving an electric motor, during acceleration. The energy storage unit also spins the internal combustion engine of the primary power unit by means of the electric power generator operating as a motor. States of charge (SOCs) of the energy storage systems are monitored. If SOCs are below minimum restart thresholds, the engine must restart. Restart is controlled accordingly.

US2003/0191576 relates to automotive "soft" hybrid vehicles, having for example a high voltage bus at 42 volts and a low voltage bus at 14 volts. A high voltage energy storage device may supply power to an integrated starter-generator control circuit, during a high-loading period, which may include starting of the engine.

MEANS TO SOLVE THE PROBLEM

In order to achieve the above objects, a hybrid rolling stock as set out in claim 1 is provided, according to the present invention.

With the present hybrid rolling stock of the invention, the storage power of the secondary battery can be used to drive the generator as a motor and to thereby start the engine without providing a special starting device for starting the engine generator.

In the hybrid rolling stock of the invention, the starting of the engine is performed by converting the DC power of the secondary battery to AC power via the power converting means, and driving the generator as a motor by the converted AC power. Since the engine is started by converting the DC power of the secondary battery to AC power via the power converting means and driving the generator as motor, the starting of the engine can be performed by using a hybrid mechanism such as power conversion and generator motor.

The above-described hybrid rolling stock further comprises a secondary battery monitoring means for monitoring the state of the secondary battery, and a voltage detecting means for detecting the voltage of the secondary battery in the power converter control means, and the engine can be started even when a secondary battery information output from the secondary battery monitoring means is abnormal, as long as the secondary battery voltage output from the voltage detecting means is within a predetermined range. In other words, even if an abnormal information exists in the state of the secondary battery detected via the secondary battery monitoring means, the engine can still be started as long as it is ensured that the secondary battery voltage is within a predetermined range.

Further, the hybrid rolling stock according to the present invention may comprise a secondary battery voltage detecting means for detecting the voltage between both ends (total voltage) of a plurality of secondary batteries connected in series, and an engine start judging means for judging whether the engine can be started or not based on the output of the secondary battery voltage detecting means.

EFFECT OF THE INVENTION

According to the present invention, the engine can be started by the retention power of the secondary battery, so that there is no need to prove a special starting device, and the system can be down-sized and formed at a low cost. According further to the present invention, the engine can be started even when the secondary battery is abnormal, so that the occurrence of a system stop state can be prevented. If the engine can be started, the rolling stock can at least run via engine power, so that even if there is some need to examine or repair the vehicle or the secondary battery, the rolling stock can be returned to a rolling stock maintenance base and subjected to necessary treatment to cope with the abnormality.

BRIEF DESCRIPTION OF THE DRAWINGS

[FIG.1] A view showing a preferred embodiment of the present invention.
[FIG. 2] A view showing the contents of output of a secondary battery information monitoring section 10.
[FIG. 3] A flowchart showing the process of the engine start judging section 93.
[FIG. 4] A flowchart showing a portion of the process of the control section 92.

DESCRIPTION OF REFERENCE NUMBERS

[0018]

1　engine
2　induction generator
3　speed signal generator
4　power converter
5　switch
6　secondary battery
7　voltage detector
8　load
9　power converter control section
10　secondary battery information monitoring section
91　speed detecting section
92　control section
93　engine start judging section

BEST MODE FOR CARRYING OUT THE INVENTION

The best mode for carrying out the present invention will now be described with reference to the drawings.

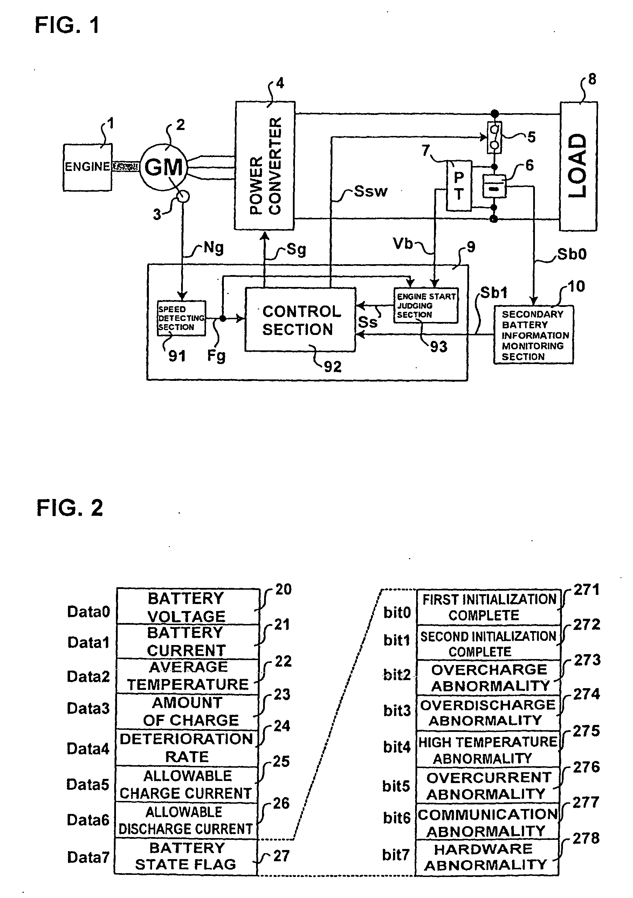

FIG. 1 illustrates a configuration of a power system according to the present invention. In the power system illustrated in FIG. 1, an engine 1 and an induction generator 2 are connected mechanically via a joint or the like, and the output of the induction generator 2 is connected to a power converter 4. One of the outputs of the power converter 4 is connected to one terminal of a switch 5 and one input of a load 8, and the other output of the power converter 4 is connected to a negative-side terminal of a secondary battery 6 and the other input of the load 8. Further, the other terminal of the switch 5 is connected to a positive terminal of the secondary battery 6, and a voltage detector 7 is connected to both ends of the secondary battery 6.

In the present embodiment, the load 8 assumes an inverter and an induction motor, but the detailed description thereof is omitted since it is not directly related to the present invention.

On the other hand, a speed signal Ng output from a speed signal generator 3 disposed on the induction generator 2 is input to a speed detecting section 91 of the power converter control section 9, and a revolution frequency Fg output from the speed detecting section 91 is entered to a control section 92 and an engine start judging section 93. Further, the secondary battery voltage Vb output from the voltage detector 7 is entered to an engine start judging section 93 of the voltage converter control section 9, and a secondary battery information Sb0 corresponding to battery units output from the secondary battery 6 is entered to a secondary battery information monitoring section 10.

Further, a secondary battery information Sb1 organized and output from the secondary battery information monitoring section 10 and a start enable signal Ss output from the engine start judging section 93 are entered to the control section 92 of the power converter control section 9, and a drive signal Sg and a switch signal Ssw output from the control section 92 are respectively entered to the power converter 4 and the switch 5.

The operation performed in the above configuration when the engine 1 is started will now be described. When the engine 1 is started, the induction generator 2 directly mechanically connected to the engine 1 is revolved via the same number of revolutions as the engine 1, and a speed signal Ng [rpm] corresponding to the number of revolutions is output from the speed signal generator 3. In the power converter control section 9, the speed signal Ng is converted into revolution frequency Fg [Hz] at the speed detector 91 and output therefrom. The relationship between the speed signal Ng and the revolution frequency Fg is as shown in the following expression 1.

$$Fg = Ng/30 \ [Hz] \quad (Expression \ 1)$$

The control section 92 computes a drive frequency Fc of the power converter 4 based on the above-described revolution frequency Fg, and outputs a corresponding drive signal Sg. The relationship between the revolution frequency Fg and the drive frequency Fc is shown in the following expression 2.

$$Fc = Fg + Fs \ [Hz] \quad (Expression \ 2)$$

Here, Fs represents the slip frequency of the induction generator.

The present embodiment uses an induction motor as the induction generator 2 and an inverter as the power converter 4, and DC power is generated by using these devices in a power regeneration mode. Therefore, the slip frequency Fs shown in the above expression 2 is normally a negative value.

The DC power output from the power converter 4 is normally added to the output of the secondary battery 6 and supplied to the load 8, but if the amount of charge of the secondary battery 6 is low, the DC power is charged to the secondary battery 6 via the switch 5. Here, the amount of charge of the secondary battery 6 is obtained via a secondary battery information Sb1 described later.

The contents of a secondary battery information Sb1 output from the secondary battery information monitoring section 10 is shown in FIG. 2. As shown, the secondary battery information Sb1 is composed of a battery voltage 20, a battery current 21, a battery average temperature 22, an amount of charge 23 showing the state of charge of the battery, a deterioration rate 24 showing the level of deterioration of the battery, an allowable charge current 25 and an allowable discharge current 26 computed based on the battery temperature and amount of charge, and a battery state flag 27 showing the contents of abnormality of the battery, each composed of a one-byte data (0 to 255), and further, the battery state flag 27 is composed of a first initialization complete 271 and a second initialization complete 272 showing the battery preparation complete state, an overcharge abnormality 273 showing the overcharge of the battery, an overdischarge abnormality 274 showing low voltage of the battery, a high temperature abnormality 275 of the batter, an overcurrent abnormality 276, a communication abnormality 277 between the battery and the secondary batteryinformation monitoringsection 10, and a hardware abnormality 278 of the battery or the secondary battery information monitoring section 10, each composed of a one-bit data ("1" or "0"). As shown, when the secondary battery 6 is operating correctly, the battery state flag 27 is set to "1" for the first initialization complete 271 and the second initialization complete 272, and set to "0" for all the other abnormality information 273 through 278, but if some abnormality occurs and any one of the abnormality information 273 through 278 is set to "1", the control section 92 opens the switch 5 via a switch signal Ssw and releases the secondary battery 6.

Next, we will describe an example of starting the engine 1 according to the above- described configuration. As described, according to the present embodiment, the induction generator 2 is a general induction motor, and the power converter 4 is an inverter. Therefore, by driving the power  converter 4 via a drive signal Sg of the drive frequency Fc computed through expression 2 by setting the slip frequency Fs to a positive value, the engine 1 can be started.

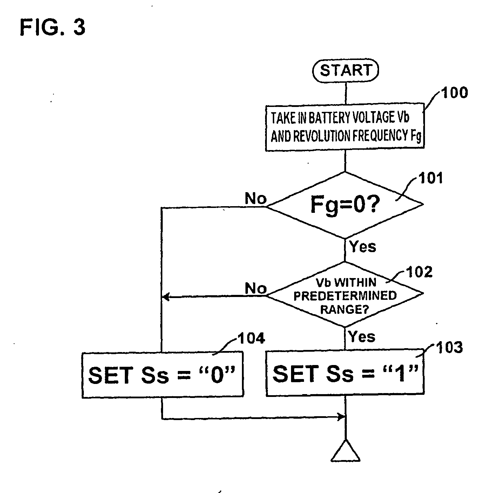

FIG. 3 shows the process of the engine start judging section 93 via a flowchart.

At first, in step 100, the battery voltage Vb and the revolution frequency Fg are taken in, and in the next step 101, it is determined whether the revolution frequency Fg is "0" or not. When Fg = 0, the engine is stopped, so in step 102, it is determined whether the battery voltage Vb is within a predetermined range or not. As a result, if the battery voltage Vb is within a predetermined range, it is determined that engine start is possible, and in step 103, the start enable signal Ss is set to "1". Here, the predetermined range of the battery voltage Vb should obviously be set within a maximum voltage value causing overcharge abnormality and a minimum voltage value causing overdischarge abnormality of the battery informatin shown in FIG. 2. On the other hand, when the revolution frequency in step 101 is not "0", that is, when the engine 1 is started, or when the secondary battery voltage Vb is determined to fall out of the predetermined range in step 102, the start enable signal Ss is set to "0" in step 104.

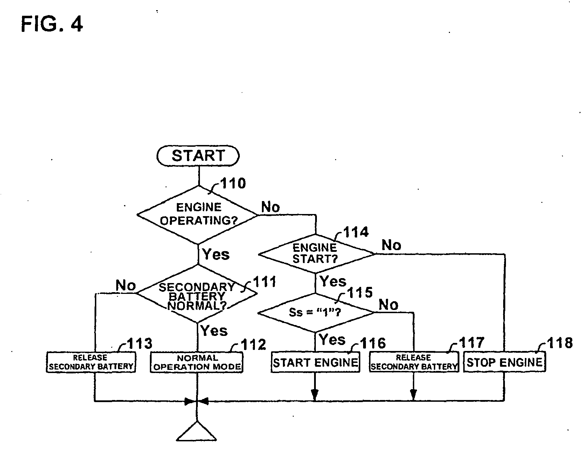

FIG. 4 shows a portion of the process of the control section 92 via a flowchart.

**AMENDMENT**

The control section 92 performs control of the power converter 4 via a start enable signal Ss output from the engine start judging section 93. At first, when the engine is operating in step 110, it is judged in step 111 whether the battery is normal or not via the secondary battery information shown in FIG. 2, and when the battery is normal, the engine is operated via a normal operation mode **(step 112)**. However, if the secondary battery is judged as abnormal in step 111, the switch signal Ssw to be provided to the switch 5 is set to "0" in step 113 to release the secondary battery.

**[0030]**    [0026] On the other hand, when it is determined in step 110 that the engine is in stopped state, it is judged whether engine start is required or not in step 114, and when engine start is required, it is judged whether the start enable signal Ss output from the engine start judging section 93 is "1" or not **(step 115)** , and if **Ss** is "1", the engine is started in step 116. However, if Ss is "0", the secondary battery is released in step 117 similar to the operation of step 113. When engine start is not required in step 114, the engine stop state is maintained in step 118.

**[0031]**    [0027] As described, according to the present embodiment, the engine 1 can be started by the retention power of the secondary battery 6, so the system does not require a special start device, and the system can be downsized and formed via a low cost. Further according to the present invention, even if the secondary battery  information 6 denotes abnormality, the engine 1 can be started as long as the secondary battery voltage is within a predetermined range, so that it becomes possible to prevent the occurrence of a system stop state as much as possible.

**Claims**

**1.**    A hybrid rolling stock comprising an engine (1), a generator (2) driven by the engine, a power converting means (4) for converting an AC power output from the generator to DC power, a secondary battery (6) connected in parallel to an output of the power converting means, and a power converter control means (92) for controlling the power converting means based on a state of a load, wherein the engine is arranged to be started by the power of the secondary battery (6), and the starting of the engine (1) is performed by converting the DC power of the secondary battery to AC power via the power converting means (4), and driving the generator (2) as a motor by means of the converted AC power,

there being a secondary battery monitoring means (10) for monitoring the state of the secondary battery which outputs secondary battery information indicating an abnormal state,

a voltage detecting means (7) for detecting the voltage of the secondary battery and

an engine start judging means (93) arranged for judging whether or not engine start can be performed on the basis of the speed of the generator and the voltage of the secondary battery (6) and outputting a start enable signal to the power converter control means (9), in the case when the engine is stopped and the voltage of the secondary battery is in a predetermined range between a maximum voltage value causing overcharge abnormality and a minimum voltage value causing over discharge abnormality,

wherein the power converter control means (92) is arranged  to effect starting of the engine (1) when said start enable signal is output, even when the secondary battery information output from the secondary battery information indicates an abnormal secondary battery operation state.

## Patentansprüche

1. Hybridfahrzeug, umfassend einen Motor (1), einen vom Motor angetriebenen Generator (2), ein Leistungsumwandlungsmittel (4) zum Umwandeln einer Wechselstromausgangsleistung vom Generator in Gleichstromleistung, eine Sekundärbatterie (6), die parallel zu einem Ausgang des Leistungsumwandlungsmittels geschaltet ist, und ein Leistungsumwandlersteuermittel (92) zum Steuern des Leistungsumwandlungsmittels basierend auf einem Ladezustand, worin der Motor so angeordnet ist, dass er durch die Leistung der Sekundärbatterie (6) gestartet wird, und das Starten des Motors (1) durch Umwandeln der Gleichstromleistung der Sekundärbatterie in Wechselstromleistung durch das Leistungsumwandlungsmittel (4) und Antreiben des Generators (2) als Motor durch die umgewandelte Wechselstromleistung erfolgt,
wobei ein Sekundärbatterieüberwachungsmittel (10) zum Überwachen des Zustands der Sekundärbatterie, das Sekundärbatterieinformation über einen anormalen Zustand gibt,
ein Spannungsdetektionsmittel (7) zum Detektieren der Spannung der Sekundärbatterie und
ein Motorstartbeurteilungsmittel (93), das so angeordnet ist, dass es auf der Grundlage der Geschwindigkeit des Generators und der Spannung der Sekundärbatterie (6) beurteilt, ob ein Motorstart durchgeführt werden kann, und ein Startfreigabesignal an das Leistungsumwandlersteuermittel (92) abgibt, falls der Motor gestoppt wird und die Spannung der Sekundärbatterie in einem vorbestimmten Bereich zwischen einem eine Überladungsanormalität verursachenden Höchstspannungswert und einem eine Überentladungsanormalität verursachenden Mindestspannungswert liegt, ausgebildet sind,
worin das Leistungsumwandlersteuermittel (92) so angeordnet ist, dass es das Starten des Motors (1) bewirkt, wenn das Startfreigabesignal ausgegeben wird, selbst wenn die Sekundärbatterieinformationsausgabe der Sekundärbatterieinformation einen anormalen Zustand des Sekundärbatteriebetriebs anzeigt.

## Revendications

1. Matériel roulant hybride comprenant un moteur (1), un générateur (2) entraîné par le moteur, un moyen de conversion de puissance (4) pour la conversion d'une sortie de puissance CA du générateur en puissance CC, une batterie secondaire (6) montée en parallèle à une sortie du moyen de conversion de puissance et un moyen de commande de convertisseur de puissance (92) pour commander le moyen de conversion de puissance sur la base d'un état d'une charge, où le moteur est agencé pour être démarré par la puissance de la batterie secondaire (6), et le démarrage du moteur (1) est exécuté en convertissant la puissance CC de la batterie secondaire en puissance CA par le moyen de conversion de puissance (4), et en entraînant le générateur (2) comme un moteur au moyen de la puissance CA convertie,
un moyen de surveillance de batterie secondaire (10) étant réalisé pour surveiller l'état de la batterie secondaire qui émet une information de batterie secondaire indiquant un état anormal,
un moyen de détection de tension (7) pour détecter la tension de la batterie secondaire, et
un moyen d'établissement de démarrage de moteur (93) agencé pour établir si oui ou non le démarrage du moteur peut être exécuté sur la base de la vitesse du générateur et de la tension de la batterie secondaire (6) et émettant un signal de validation de démarrage au moyen de commande de convertisseur de puissance (9) dans le cas où le moteur est arrêté et que la tension de la batterie secondaire est dans une plage prédéterminée entre une valeur de tension maximum provoquant une anomalie de surcharge et une valeur de tension minimum provoquant une anomalie de décharge,
où le moyen de contrôle de convertisseur de puissance (92) est agencé pour effectuer le démarrage du moteur (1) lorsque ledit signal de validation de démarrage est émis, même lorsque l'information de la batterie secondaire émise de l'information de batterie secondaire indique un état de fonctionnement de batterie secondaire anormal.

**FIG. 1**

**FIG. 2**

| | | | | | |
|---|---|---|---|---|---|
| Data0 | BATTERY VOLTAGE | 20 | bit0 | FIRST INITIALIZATION COMPLETE | 271 |
| Data1 | BATTERY CURRENT | 21 | bit1 | SECOND INITIALIZATION COMPLETE | 272 |
| Data2 | AVERAGE TEMPERATURE | 22 | bit2 | OVERCHARGE ABNORMALITY | 273 |
| Data3 | AMOUNT OF CHARGE | 23 | bit3 | OVERDISCHARGE ABNORMALITY | 274 |
| Data4 | DETERIORATION RATE | 24 | bit4 | HIGH TEMPERATURE ABNORMALITY | 275 |
| Data5 | ALLOWABLE CHARGE CURRENT | 25 | bit5 | OVERCURRENT ABNORMALITY | 276 |
| Data6 | ALLOWABLE DISCHARGE CURRENT | 26 | bit6 | COMMUNICATION ABNORMALITY | 277 |
| Data7 | BATTERY STATE FLAG | 27 | bit7 | HARDWARE ABNORMALITY | 278 |

## FIG. 3

START

TAKE IN BATTERY VOLTAGE Vb
AND REVOLUTION FREQUENCY Fg
— 100

Fg=0? — 101
No ← / Yes ↓

Vb WITHIN
PREDETERMINED
RANGE? — 102
No ← / Yes ↓

SET Ss = "0" — 104

SET Ss = "1" — 103

FIG. 4

```
                    ( START )
                        |
                      ┌110
                       /\
                      /  \        No
                <ENGINE OPERATING?>─────────────┐
                      \  /                       |
                       \/                      ┌114
                       |                        /\
                      Yes                      /  \        No
                       |                 <ENGINE START?>──────────────────┐
                      ┌111                   \  /                         |
          No           /\                     \/                          |
       ┌────<SECONDARY BATTERY NORMAL?>       |                           |
       |              \  /                   Yes                          |
       |               \/                     |  ┌115                     |
       |               |                      /\                          |
       |              Yes                    /  \        No               |
       |               |              <Ss = "1"?>──────────┐              |
    ┌113┐          ┌112┐                  \  /             |              |
    |RELEASE|      |NORMAL|                \/              |              |
    |SECONDARY|    |OPERATION|            Yes            ┌117┐          ┌118┐
    |BATTERY|      |MODE|                  |  ┌116┐      |RELEASE|      |STOP  |
    └───┬───┘      └──┬───┘              |START|    |SECONDARY|    |ENGINE|
        |             |                  |ENGINE|    |BATTERY|     └───┬──┘
        |             |                  └──┬──┘      └───┬───┘        |
        |             └──────┬──────────────┘             |            |
        └────────────────────┤                            |            |
                             ▽
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1745967 A
- US 20070124037 A
- US 20030191576 A